# EUROPEAN PATENT APPLICATION

(11) **EP 4 362 250 A1**
(43) Date of publication of application: **01.05.2024**
(21) Application number: 22828735.5
(22) Date of filing: 22.06.2022
(51) Int. Cl.: H02B 13/035, H02B 3/00, F16H 55/30

(54) **ROTATING DEVICE FOR BUSHING**

(30) Priority: 23.06.2021 KR 20210081270
(71) Applicant: Hyosung Heavy Industries Corporation, Seoul 04144 (KR)
(72) Inventor: RYU, Ju Tae, Changwon-si Gyeongsangnam-do 51778 (KR)
(74) Representative: Viering, Jentschura & Partner mbB Patent- und Rechtsanwälte
(86) International application number: PCT/KR2022/008828
(87) International publication number: WO 2022/270888

(57) **Abstract**

The present disclosure is a rotating device for bushing. According to the present disclosure, the bushing 20 installed in an enclosure 12 of a power device 10 may be rotated at a predetermined angle. The enclosure 12 may be composed of a fixing part 12' and a rotating part 12" in which the bushing 20 is installed and rotated. A main bracket 30 may be installed on the fixing part 12'. A decelerator 36 and a driving source 40 may be installed in the main bracket 30. A driving sprocket 50 may be installed in the main bracket 30, and a driven sprocket 54 may be installed in the rotating part 12". A chain 52 winding the driving sprocket 50 and the driven sprocket 54 is installed to rotate the bushing 20.

## Description

### Technical Field

1. The present disclosure relates to a rotating device for bushing.

### Background Art

2. A bushing is used to draw in and out a current from the outside to the inside or from the inside to the outside of a power device such as a transformer, a circuit breaker, etc., by insulating the current from an enclosure. Such a bushing is essential for insulation, especially at high voltages.

3. Such a bushing may generally be installed and used in an enclosure of a power device, and may extend from the enclosure to be connected to a line. A plurality of such bushings may be used in one power device, and a predetermined interval should be maintained between them.

4. Accordingly, the plurality of bushings protrudes from the enclosure of the power device, and the space occupied by the power device including the bushings may be expanded. As described above, the power device including the bushing may be moved to a site and installed in a state of being assembled in a factory. In particular, recently, as a mobile transformer installed and used at a specific location for a specific period of time rather than permanently installed has been used, transporting a power device including a bushing has become necessary.

5. However, a plurality of bushings used in a power device occupy a large amount of space in the state of being actually used, thus when transporting them by vehicle, many restrictions arise depending on the road conditions. Depending on the width and passable height of a road, transportation of a power device including bushings may not be easy.

6. Therefore, in prior arts such as EP 2615 705A1, EP 2733 802B1, US 9,768,594, a bushing is rotated to adjust the overall width and height of a power device including the bushing and transported. In actual use, the bushing can be rotated to return to its original position.

7. However, since the size of the bushing is large, there is a problem in that the capacity of a driving source providing driving force for rotating the bushing must be increased. Of course, the capacity of the driving source may be reduced through deceleration by gear train, but there is a limitation.

8. In addition, when power of a driving source is transmitted for rotating the bushing by using a gear, in order not to use a plurality of gears, the installation position of the driving source must be adjacent to a rotating part, which imposes a lot of restrictions on the design.

9.

### Disclosure

### Technical Problem

10. An objective of the present disclosure for solving the conventional problems as described above is to relatively reduce the capacity of a driving source in a rotating device for bushing used in a power device.

11. In addition, an objective of the present disclosure is to allow an installation position of the driving source to be freely set in the rotating device for bushing used in a power device.

12. Moreover, an objective of the present disclosure is to use a chain and a sprocket which are relatively easy to design for the rotating device for bushing used in a power device.

13. Further, an objective of the present disclosure is to simplify a tension setting of the chain in the rotating device for bushing used in a power device.

14. In addition, an objective of the present disclosure is to facilitate an installation of the chain in the rotating device for bushing used in a power device.

15.

### Technical Solution

16. According to features of the present disclosure for achieving the above-mentioned objectives, the present disclosure relates to a rotating device for bushing installed in an enclosure of a power device may include: a main bracket installed on one side of a fixing part of an enclosure; a driving sprocket installed on the main bracket and rotated by a driving force of a driving source; a driven sprocket installed on the side of the bushing, which relatively rotates with respect to the fixing part of the enclosure; and a chain wound around the driving sprocket and the driven sprocket to transmit the driving force of the driving source to the driven sprocket so as to rotate the bushing.

17. The main bracket may be equipped with the driving source for driving the driving sprocket and a decelerator for reducing and transmitting the driving force of the driving source.

18. The main bracket may be further provided a main cover installed to face a surface of one side of the main bracket at a predetermined distance, and a connecting piece connected to the main cover by a hinge to be relatively rotated, and fastened to or separated from the main cover and the main bracket.

19. A driving shaft may be installed with both ends thereof being rotatably supported in the main bracket and the main cover with bearings, and the driving shaft may be rotated with a driving force output through the decelerator.

20. The driving sprocket may be installed on the driving shaft, and a driving gear which receives power by being engaged with an output gear provided on a decelerator shaft of the decelerator may be installed on the driving shaft.

21. The driven sprocket may be configured by being divided into a semicircular first piece and second piece, and may be installed on the bushing side rotating with respect to the fixing part of the enclosure.

22. Cutting surfaces may be formed at each end part of the first piece and the second piece and the driven sprocket may be installed on the bushing side in a state where the cutting surfaces are in contact with each other. The cutting surfaces may be positioned respectively in the gravity direction and the gravity opposite direction in the driven sprocket.

23. A clamp for guiding the rotation of the bushing side may be further provided on the fixing part of the enclosure, and the clamp may include a pad for guiding rotation of the rotating bushing side.

24. The clamp may be installed at a predetermined angle and distance from the main cover.

25. The clamp may include a clamp body, a first guide plate and a second guide plate extending parallel to each other in the clamp body, and the pad may be installed on the second guide plate.

### Advantageous Effects

26. A rotating device for bushing according to the present disclosure may have at least one or more of the following effects.

27. In the present disclosure, the power transmitted from a driving source is decelerated by a decelerator, and additional deceleration may be performed by using a driving sprocket, a driven sprocket, and a chain. Accordingly, the amount of deceleration may be relatively increased for the rotation of the bushing, and thus the capacity of the driving source may be relatively reduced, thereby providing a small sized rotating device for the bushing.

28. In addition, a chain is used in the present disclosure such that a distance between a rotation object and the driving source may be adjusted simply by varying the length of the chain. Therefore, a position where the driving source for driving the chain is installed may be freely designed, thereby increasing the freedom in designing a power device having a rotatable bushing.

29. In addition, in the present disclosure, chains and sprockets may be used to rotate the bushing used in a power device. The chain is made by repeatedly connecting a plurality of identical parts, so the design is relatively easy and the manufacturing cost is low.

30. In the present disclosure, when the chain is wound around the driving sprocket and the driven sprocket, the position of the main bracket on which the driving sprocket is installed may be adjusted with respect to the enclosure. That is, since the installation position of the driving sprocket may be adjusted, the work of winding the chain around the driving sprocket and the driven sprocket is easy. Since the position of the driving sprocket is moved after the chain is wound on the driving sprocket and the driven sprocket, the tension setting of the chain is simple and the assembly work is convenient.

31. In addition, in the present disclosure, a connecting piece may be rotatably opened and closed with respect to the main cover covering the main bracket on which the driving sprocket is installed. Accordingly, the chain may be hung(wound) around the driving sprocket while the connecting piece is opened, such that the installation of the chain may be easy and the assembly work may be convenient.

32.

### Description of drawings

33. FIG. 1 is a perspective view showing a power device to which a preferred embodiment of a rotating device for bushing according to the present disclosure is applied.

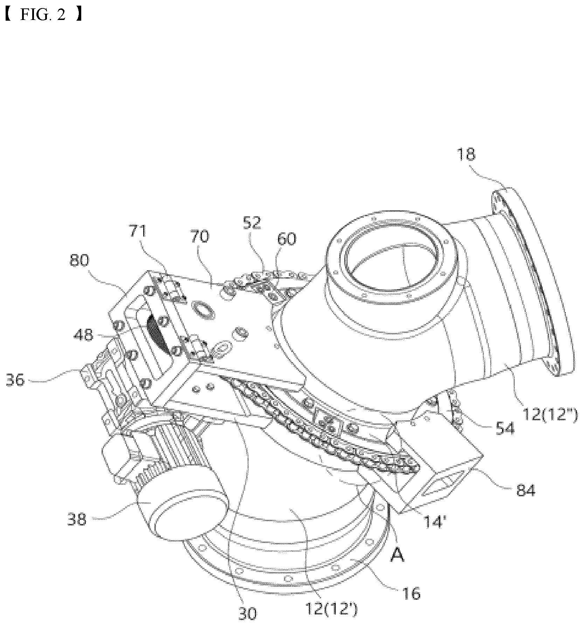

34. FIG. 2 is a perspective view showing the embodiment of the present disclosure installed in an enclosure of a power device.
35. FIG. 3 is an exploded perspective view showing that the embodiment of the present disclosure is installed in the enclosure of the power device.
36. FIG. 4 is an exploded perspective view showing the configuration of an important part of the embodiment of the present disclosure.
37. FIG. 5 is a perspective view showing a main bracket and the surrounding configuration thereof constituting the embodiment of the present disclosure.
38. FIG. 6 is an exploded perspective view showing the configuration of a driven sprocket and a coupling piece constituting the embodiment of the present disclosure.
39. FIG. 7 is a detailed view showing the part of circle A of FIG. 2.
40. FIG. 8 is an exploded perspective view showing a clamp constituting the embodiment of the present disclosure.
41. FIG. 9 is a working state diagram showing the process of installing a chain in the embodiment of the present disclosure.
42. FIG. 10 is a working state diagram for explaining setting the tension of the chain in the embodiment of the present disclosure in a state in which the main bracket is deleted.

43.

### Best Mode for Disclosure

44. Hereinafter, some embodiments of the present disclosure will be described in detail with reference to exemplary drawings. In assigning reference numerals to the components of each drawing, it should be noted that the same components are given the same reference numerals as much as possible even though the same components are indicated on different drawings. In addition, in describing the embodiment of the present disclosure, if it is determined that a detailed description of a related known configuration or function interferes with the understanding of the embodiment of the present disclosure, the detailed description thereof will be omitted.

45. In addition, in describing the components of the embodiment of the present disclosure, terms such as first, second, A, B, (a), (b), etc. may be used. These terms are only used to distinguish between the components, and the nature, or order of the components are not limited by the terms. When a component is described as being "combined with", "coupled to" or "connected to" another component, the component may be directly connected to or combined with each other, but it should be understood that another component may be "connected to", "coupled to" or " combined with" each of the components therebetween.

46. As illustrated in the drawings, an enclosure 12 may form a part of the exterior of a power device 10. A conductor, a circuit breaker, or the like may be provided inside the enclosure 12. An insulating gas may be filled inside the enclosure 12. The enclosure 12 may be divided into a fixing part 12' and a rotating part 12". The rotating part 12" may be relatively rotated with respect to the fixing part 12' of the enclosure 12.

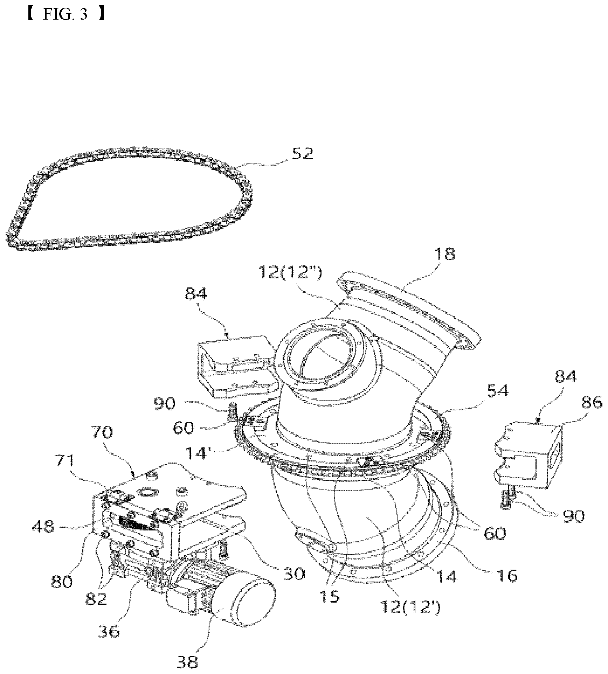

47. A fixing part flange 14 may be formed on one side of the fixing part 12' (see FIG. 3). The fixing part flange 14 may have a circular ring shape. The rotating part 12" may have a rotating part flange 14' so as to be coupled to or relatively rotated with the fixing part flange 14. The fixing part flange 14 and the rotating part flange 14' may have dimensions and shapes corresponding to each other. The fixing part flange 14 and the rotating part flange 14' may be fastened to each other by an enclosure fastener 15.

48. Amain body mounting flange 16 may be provided on the other side of the fixing part 12'. The main body mounting flange 16 may also have a ring shape. The main body mounting flange 16 may be coupled to one side of the main body of the power device 10.

49. A bushing mounting flange 18 may be provided on the other side of the rotating part 12". The bushing mounting flange 18 is for fastening with a bushing 20. The bushing mounting flange 18 may also have a circular ring shape.

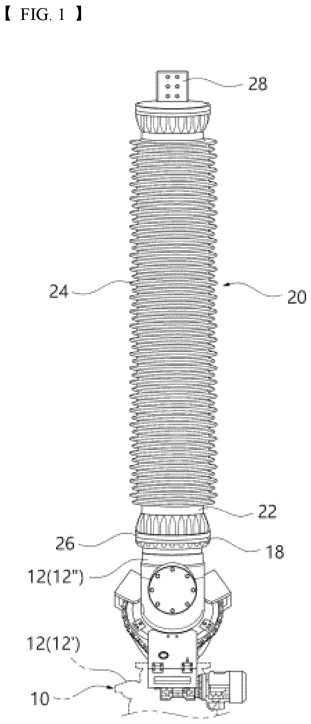

50. A bushing body 22 having a conductor therein may form a framework of the bushing 20. There may be an insulator 24 surrounding the outer surface of the bushing body 22. The insulator is for insulating the bushing body from the outside. As shown in FIG. 1, an enclosure mounting flange 26 may be provided at one end of the bushing body 22. The enclosure mounting flange 26 may have a shape and dimension corresponding to the bushing mounting flange 18 and may be fastened to each other. A terminal 28 may be provided on a portion of the bushing body 22 corresponding to the opposite end of the enclosure mounting flange 26. The terminal 28 is for electrical connection with a line.

51. Referring to FIGS. 3 to 5, a main bracket 30 may be mounted on one side of the fixing part 12'. A decelerator 36 and a driving source 38 to be described below may be installed in the main bracket 30. The main bracket 30 is mounted on the fixing part flange 14 in the present embodiment. However, the main bracket 30 may be mounted anywhere between the fixing part flange 14 and the main body mounting flange 16. A portion of the main bracket 30 coupled to the fixing part 12' may have a shape corresponding to the external shape of the fixing part 12'. In the present embodiment, the corresponding portion of the main bracket 30 has a curved surface having a predetermined curvature.

52. The main bracket 30 may have a plate shape having a predetermined area. The main bracket 30 may have a mounting hole 32 and a long mounting hole 32' for coupling to the fixing part 12'. The mounting hole 32 may be formed in a round shape. The long mounting hole 32' may have an oval cross section viewed laterally. The long mounting hole 32' may be used when the main bracket 30 is temporarily coupled to the fixing part 12'. Of course, the long mounting hole 32' may also be used when the main bracket 30 is completely coupled to the fixing part 12'. The mounting hole 32 may be used when the main bracket 30 is completely coupled to the fixing part 12'. A bracket mounting fastener 33 may be fastened to the fixing part 12' by penetrating the mounting hole 32 and the long mounting hole 32'. The mounting hole 32 and the long mounting hole 32' are formed by two, respectively, but the number thereof may vary depending on the size of the main bracket 30.

53. A plurality of main fasteners 34 passing through the main bracket 30 may mount the decelerator 36 to the main bracket 30. A driving source 38 may be coupled to the decelerator 36. Of course, the driving source 38 may be mounted on the main bracket 30 by the main fastener 34. The driving source 38 provides rotational force, and the decelerator 36 may serve to reduce the driving force provided from the driving source 38.

54. An output gear 42 may be provided on one side of a decelerator shaft 40, which is an output shaft of the decelerator 36. The output gear 42 may serve to transmit the output of the decelerator 36 to a driving gear 48 below. The decelerator shaft 40 may protrude from the decelerator 36 and penetrate the main bracket 30. When the installation position of the decelerator 36 is on another surface of the main bracket 30, the decelerator shaft 40 may be used without penetrating the main bracket 30.

55. A driving shaft 44 may be installed with both ends thereof rotatably supported by the main bracket 30 and a main cover 70 to be described below. The driving shaft 44 may be rotatably supported by bearings 46 respectively installed in the main bracket 30 and the main cover 70. The driving gear 48 may be installed on the driving shaft 44 so as to be rotated integrally with the driving shaft 44. The driving gear 48 may be engaged with the output gear 42 to receive power.

56. A driving sprocket 50 may be installed on the driving shaft 44 at a position spaced apart from the driving gear 48 by a predetermined distance. The driving sprocket 50 may be integrally rotated with the driving shaft 44. The driving sprocket 50 may be located in a space corresponding to a space between the main bracket 30 and the main cover 70.

57. A chain 52 may be wound around the driving sprocket 50. The chain 52 may form a closed curve in the form of an infinite orbit. The chain 52 may be wound around the driving sprocket 50 and at the same time may also be wound around a driven sprocket 54 installed on the rotating part 12". Accordingly, the chain 52 may reduce the speed of the rotation of the driving sprocket 50 and transmit it to the driven sprocket 54. The diameter of the driven sprocket 54 is relatively larger than the diameter of the driving sprocket 50, so the speed is reduced by the driving sprocket 50, the chain 52, and the driven sprocket 54.

58. The chain 52 may be configured such that a pair of outer plates 53 and a pair of inner plates 53' are coupled by a pin 52', which, when made of closed curve, may have a structure that may be separated at a specific position. A part of the outer plate 53 connecting the chain 52 in a closed curve and separating the chain 52 into a straight line is referred to as a coupling outer plate 53c. For example, by separating a split pin 52s installed on a coupling pin 52" protruding through the coupling outer plate 53c, the chain 52 of the closed curve may be separated from the driving sprocket 50 and the driven sprocket 54.

59. In the coupling outer plate 53c, a through hole through which the coupling pin 52" passes has a straight section, and the coupling pin 52" also has a flat section corresponding to one side of the outer surface, such that the coupling direction of the coupling pin 52" may be regulated. At this time, the coupling out plate 53c having the through hole with the straight section is positioned in the opposite direction of gravity, such that the split pin 52s may be coupled and separated in the opposite direction of gravity with respect to the chain 52. The coupling outer plate 53c may be used for coupling and separating of the chain 52 at a position between coupling pieces 60 to be described below, or at a middle part of each of a first piece 56 and a second piece 56'.

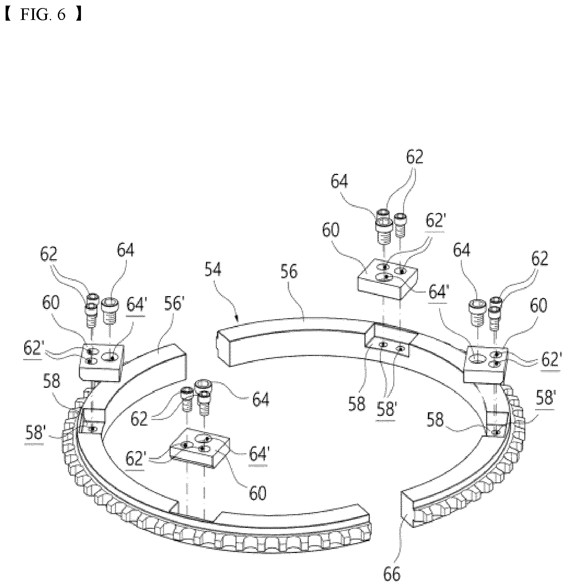

60. The driven sprocket 54 is divided into the first piece 56 and the second piece 56' in the present embodiment. The driven sprocket 54 may be fastened to the rotating part flange 14' of the rotating part 12". Of course, differently, the driven sprocket 54 may be mounted on the enclosure mounting flange 26 of the bushing 20. As shown in FIG. 6, the driven sprocket 54 may have a semicircular shape of a first piece 56 and a second piece 56'. The first piece 56 and the second piece 56' may be combined to form a single circle.

61. A fastening groove 58 may be formed in each of the first piece 56 and the second piece 56'. The fastening groove 58 may be formed on the opposite side of a surface on which the rotating part flange 14'. In the illustrated embodiment, the fastening grooves 58 are formed in two on the first piece 56 and the second piece 56', respectively. A fastening hole 58' may be formed through the fastening groove 58.

62. A part of the coupling piece 60 may be seated in the fastening groove 58. A part of the coupling piece 60 may be positioned in the fastening groove 58, and the rest part of the coupling piece 60 may protrude from the first piece 56 and the second piece 56'. The coupling piece 60 may be formed in a rectangular plate shape. The coupling piece 60 may have through holes 62' and 64'. A coupling piece fastener 62 may pass through the through hole 62' to be fastened to the fastening hole 58'. A flange fastener 64 may pass through the through hole 64' to be fastened to the rotating part flange 14'. The coupling piece 60 may serve to fasten the driven sprocket 54 to the rotating part flange 14'.

63. Both ends of the first piece 56 and the second piece 56' may have cutting surfaces 66 respectively, and the cutting surfaces 66 may contact each other when the first piece 56 and the second piece 56' are mounted on the rotating part flange 14'.

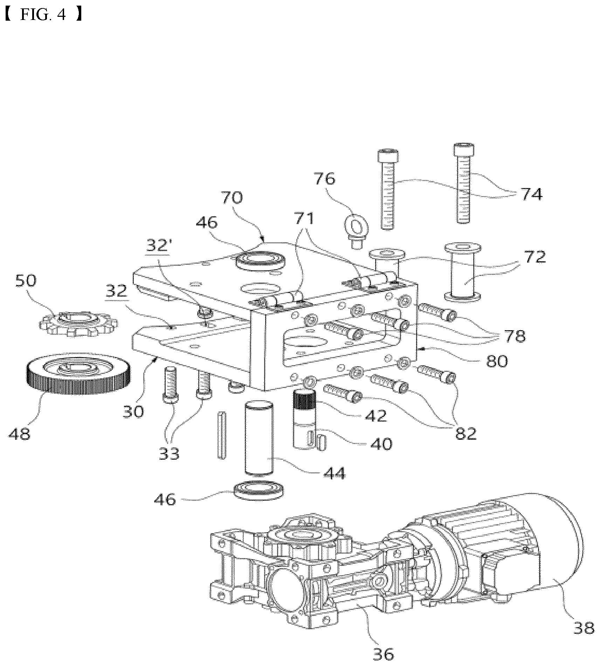

64. The main cover 70 may be provided to face the main bracket 30 at a predetermined interval. Alternatively, the main cover 70 may not be used. The main cover 70 may be coupled face to face with the main bracket 30 at a predetermined interval by a supporter 72 shown in FIG. 4. The supporter 72 may have a cylindrical shape such that both ends thereof support the surfaces of the main bracket 30 and the main cover 70 facing each other. A support fastener 74 may be used to couple the supporter 72 to the main bracket 30 and the main cover 70. The support fastener 74 may be composed of, for example, a bolt and a nut.

65. A lifting ring 76 may be formed on one side surface of the main cover 70. The lifting ring 76 may be used to move an assembly such as the main bracket 30 and the main cover 70. The main cover 70 is connected to a connecting piece 80 to be described below by a hinge 71 such that the connecting piece 80 may be rotated at a predetermined angle with respect to the main cover 70.

66. A first fastening bolt 78 may be provided to prevent the main cover 70 from rotating around the hinge 71 with respect to the connecting piece 80. The first fastening bolt 78 is fastened by penetrating the connecting piece 80 and the main cover 70 at the same time, thereby blocking rotation of the connecting piece 80 with respect to the hinge 71.

67. A pad (not shown) may be installed on a surface of the main cover 70 facing the main bracket 30. The pad is the same as a pad 92 in a clamp 84 to be described below. Since this pad has a smooth surface, the pad may guide the rotating part 12" without disturbing the rotation of the rotating part 12" even when the pad is rubbed against the side of the rotating part 12".

68. The connecting piece 80 may be provided to connect each edge of the main bracket 30 and the main cover 70. The connecting piece 80 is not necessarily required, but the connecting piece 80 is used to more firmly couple the main bracket 30 and the main cover 70. The connecting piece 80 may be connected orthogonally to the main bracket 30 and may also be connected orthogonally to the main cover 70 in the illustrated embodiment.

69. The connecting piece 80 may be fastened to the main bracket 30 by a second fastening bolt 82. The second fastening bolt 82 may pass through the connecting piece 80 to be fastened to the main bracket 30. At least two or more second fastening bolts 82 may be used. In the illustrated embodiment, three second fastening bolts 82 are used.

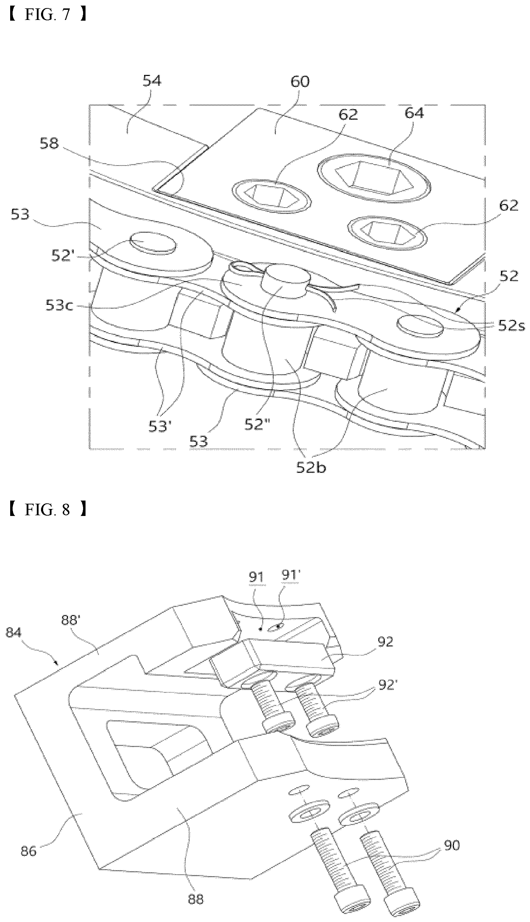

70. The clamp 84 may be installed in the fixing part 12' of the enclosure 12 as shown in FIG. 1. The clamp 84 may be fixed to the fixing part flange 14 of the fixing part 12' and may guide rotation of the rotating part 12". As shown in FIG. 8, the framework of the clamp 84 may be formed by a clamp body 86. A first guide plate 88 may protrude from one end of the clamp body 86 and a second guide plate 88' may protrude from the other end thereof. The first guide plate 88 and the second guide plate 88' may extend parallel to each other. Accordingly, the clamp body 86 may have a cross section in a "⊏" shape.

71. The clamp body 86 may be fastened to the fixing part 12'. The clamp body 86 may be fastened to the fixing part flange 14. A clamp fastener 90 may be used to fasten the clamp body 86 to the fixing part 12'. The clamp fastener 90 may fasten the first guide plate 88 to the fixing part flange 14.

72. A pad groove 91 may be formed on one surface of the second guide plate 88' of the clamp body 86. The pad groove 91 may be formed on one side of a surface facing the first guide plate 88. A pad 92 may be installed in the pad groove 91. The pad 92 may serve to guide rotation of the rotating part 12". The pad 92 may be made of a material with at least a smooth surface. The pad 92 may have a smooth surface so as not to interrupt the rotation of the rotating part 12" even if the pad 92 is rubbed against the rotating part 12". The pad 92 may be fastened to the pad groove 91 by a pad fastener 92'. The pad fastener 92' may pass through the pad 92 to be fastened to a fastening hole 91' formed in the pad groove 91.

73. Hereinafter, the use of the rotating device for bushing according to the present disclosure having the above configuration will be described in detail.

74. The rotating device of the present disclosure may be used being mounted on the enclosure 12 only when rotating the bushing 20. When the extension direction of the bushing 20 needs to be changed for installation or movement of the power device 10, the rotating device of the present disclosure may be mounted and used. After the power device 10 is transported to the installation location and its installation is completed, the rotating device of the present disclosure may be used when the bushing 20 is returned to its original position for actual use.

75. Before mounting the rotating device of the present disclosure in the enclosure 12, a gas pressure filled in the enclosure 12 may be set to a predetermined value. Although not described above, a ground bond is in contact with the fixing part 12' and the rotating part 12" at the same time by some of the enclosure fastener 15. Separate these ground bonds one by one. After separating the ground bond, the enclosure fastener 15 is fastened again.

76. Next, the driven sprocket 54 may be fastened to the rotating part flange 14' of the rotating part 12". The driven sprocket 54 is combined with the first piece 56 and the second piece 56' to form a circle. The coupling piece 60 fastened to the driven sprocket 54 is fastened to the rotating part flange 14' by the flange fastener 64. In this case, the flange fastener 64 is temporarily fastened to the rotating flange 14'. The cutting surfaces 66 of the first piece 56 and the second piece 56' may be located at a portion where the main bracket 30 is located. In general, it is possible to mount and detach while there is a worker in this position. This position may also correspond to a lower side in the direction of gravity with respect to the enclosure 12. Accordingly, the positions where the cutting surfaces 66 are in contact with each other may be a lower side in the gravity direction and an upper side in the gravity direction based on the enclosure 12. When the position is determined in this way, it may be easy for an operator to handle the first piece 56 and the second piece 56' during a mounting operation.

77. Next, the chain 52 is wound around the driven sprocket 54. That is, the chain 52 is wound on the first piece 56 and the second piece 56' at the same time to accurately set a relative position between the first piece 56 and the second piece 56'. Thereafter, the flange fastener 64 may be completely fastened. In this state, the chain 52 may not yet be connected in a form of a closed curve. After the flange fastener 64 is completely fastened, the chain 52 is separated from the driven sprocket 54.

78. After that, the driving gear 48, the driving sprocket 50, and the bearing 46 may be assembled to the driving shaft 44. At this time, the main fastener 34 is assembled to the main bracket 30 in advance before the assembly in which the driving gear 48, the driving sprocket 50, and the bearing 46 are installed in the driving shaft 44 is mounted on the main bracket 30. Then the assembly is mounted on the main bracket 30.

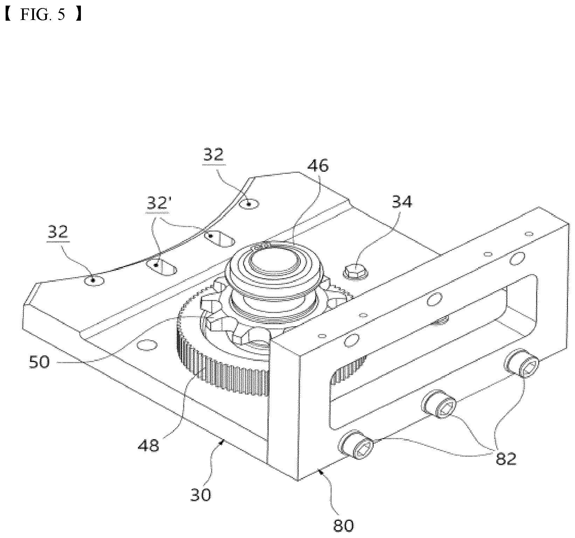

79. Next, as illustrated in FIG. 5, the connecting piece 80 is fastened to the main bracket 30 by using the second fastening bolt 82. In this state, the main cover 70 is fastened to the connecting piece 80 by using the hinge 71. The supporter 72 is fastened between the main cover 70 and the main bracket 30 by using the support fastener 74, so that the main cover 70 and the main bracket 30 are firmly fastened while maintaining a predetermined interval.

80. In this way, when the main bracket 30, the connecting piece 80, the main cover 70, and the related parts are made into one assembly, the main bracket 30 is temporarily assembled to the fixing part 12' by using the bracket mounting fastener 33. In this case, the bracket mounting fastener 33 passes through the long mounting hole 32'. The bracket mounting fastener 33 passes through a position relatively moved to the inside of the main bracket 30 in the long mounting hole 32' and is installed adjacent to the enclosure 12 to become the main bracket 30. This is to facilitate the winding of the chain 52 of a predetermined length to the driving sprocket 50 and the driven sprocket 54.

81. In the process of mounting the main bracket 30 to the fixing part 12" of the enclosure 12, the relative position between the pad in the main cover 70 and the rotating part flange 14' must be accurately set. If necessary, a liner (not shown) may be installed to adjust the gap.

82. Next, the chain 52 is wound around the driving sprocket 50 and the driven sprocket 54. The position of the driving sprocket 50 is moved relatively toward the enclosure 12. This is because the bracket mounting fastener 33 is relatively located at the inner end of the main bracket 30 within the long mounting hole 32'. In other words, it is because the driving sprocket 50 installed in the main bracket 30 is relatively adjacent to the driven sprocket 54. Accordingly, it is possible to easily wind the chain 52 on the driving sprocket 50 and the driven sprocket 54.

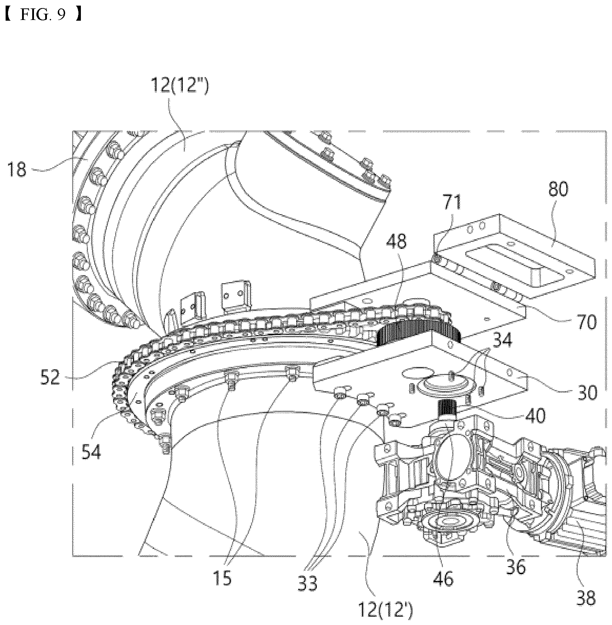

83. In the process of winding the chain 52, the second fastening bolt 82 is loosened and the connecting piece 80 is rotated around the hinge 71 to make the state as shown in FIG. 9. In this state, the chain 52 is wound around the driving sprocket 50 and the driven sprocket 54.

84. The connecting part connecting the chain 52 with a closed curve is preferably positioned at the apex position of the first piece 56 and the second piece 56' of the driven sprocket 54, that is, at the same distance from the cutting surfaces 66 on both sides. This is to ensure that the coupling outer plate 53c constituting the connecting part of the chain 52 is not located in the space between the main bracket 30 and the main cover 70 or inside the clamp 84 after the operation of rotating the bushing 20.

85. The coupling outer plate 53c is directed in the opposite direction of gravity, the coupling pin 52" passes therethrough, and the split pin 52s penetrates the coupling pin 52" laterally, so that the coupling outer plate 53c may be securely fixed. Since there is a straight section in the through hole of the coupling outer plate 53c and a plane section corresponding to the straight section in the coupling pin 52", it is recommended to work with the coupling outer plate 53c positioned in the opposite direction of gravity. If this part is in the opposite position, the split pin 52s may cause interference with peripheral components.

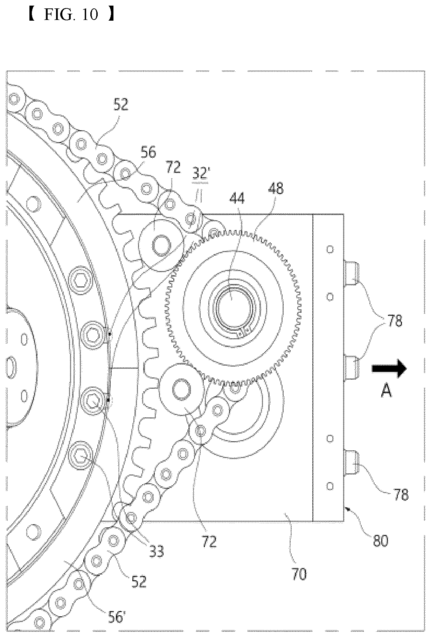

86. After the chain 52 is wound around the drive sprocket 50 and the driven sprocket 54 and connected in a closed curve, the main bracket 30 is moved in a direction relatively away from the enclosure 12. The main bracket 30 is moved in the direction of the arrow A in FIG. 10. To this end, the locking state of the bracket mounting fastener 33 in the long mounting hole 32' is released to allow the main bracket 30 to move. FIG. 10 illustrates a state in which the main bracket 30 is moved in a direction away from the enclosure 12. Here, the movement of the main bracket 30 in the direction of the arrow A may be performed by the weight of the main bracket 30.

87. When the main bracket 30 moves in this way, it moves together with the driving sprocket 50, so that the tension of the chain 52 may be adjusted by increasing the distance between the driving sprocket 50 and the driven sprocket 54. When the main bracket 30 is fastened with the bracket mounting fastener 33 at a position where the tension of the chain 52 reaches a desired value, the tension of the chain 52 may be properly set.

88. Next, the decelerator 36 is mounted on the main bracket 30. At this time, the output gear 42 in the decelerator shaft 40 may be engaged with the driving gear 48. In another embodiment, the decelerator shaft 40 may substitute for the role of the driving shaft 44. In this case, the output gear 42 of the decelerator shaft 40 and the driving gear 48 of the driving shaft 44 are not required to be used. The driving sprocket 50 may be directly installed in the decelerator shaft 40, or the decelerator shaft 40 may be coupled to the driving shaft 44 by coupling. Alternatively, the decelerator shaft 40 may be concentrically installed inside the driving shaft 44 to transmit power.

89. To mount the decelerator 36 on the main bracket 30, the main fastener 34 previously mounted on the main bracket 30 may be used. After the decelerator 36 is mounted on the main bracket 30, the connecting piece 80 is rotated around the hinge 71 and the connecting piece 80 and the main bracket 30 are fastened by the second fastening bolt 82.

90. Next, the clamps 84 may be installed at predetermined positions, respectively. The two clamps 84 may be installed with the main bracket 30 at 120 degree intervals. The clamp body 86 is fastened to and fixed to the fixing part flange 14 by using the clamp fastener 90. The pad 92 may have a predetermined gap to guide rotation of the rotating part flange 14'. For reference, the head portion of the pad fastener 92' does not protrude from the surface of the pad 92, so it does not interfere with the rotating part flange 14'.

91. Next, the driving source 38 may be mounted on the decelerator 36. Of course, the driving source 38 may be mounted on the decelerator 36 before the clamp 84 is installed. In this way, the rotating device of the present disclosure is mounted on the power device 10 to be able to rotate the bushing 20. At this time, all of the enclosure fasteners 15 fastened between the fixing part 12' and the rotating part 12" of the enclosure 12 are removed, so that the rotating part 12" may be rotated with respect to the fixing part 12'.

92. Meanwhile, the bushing 20 is rotated to be transported or stored. After the power device 10 is installed at a desired position, the bushing 20 is rotated to a position in which the power device 10 is actually used. In this way, after the bushing 20 is rotated to the actual use position, the rotating device of the present disclosure may be separated from the power device 10. The process of separating the rotating device proceeds in reverse the process described above.

93. Even though it has been described that all components constituting the embodiments of the present disclosure are combined into one or operated in combination with each other, the present disclosure is not necessarily limited to the embodiments. That is, within the scope of the objective of the present disclosure, all of the components may be selectively combined into at least one and operated. In addition, the terms such as "include", "consist of", or "have" described above mean that the corresponding component may be present unless otherwise stated, and thus should be construed that the terms do not exclude other components, but may further include other components. All terms, including technical or scientific terms, have the same meaning as commonly understood by those skilled in the art to which the present disclosure belongs, unless defined otherwise. Generally used terms, such as terms defined in the dictionary, should be interpreted as being consistent with the contextual meaning of the related art, and should not be interpreted in an ideal or excessively formal meaning unless explicitly defined in the present disclosure.

94. The above description is merely illustrative of the technical idea of the present disclosure, and those skilled in the art to which the present disclosure belongs may perform various modification and changes within the scope not departing from the essential characteristics of the present disclosure. Accordingly, the embodiments disclosed in the present disclosure are not intended to limit, but to explain the technical idea of the present disclosure, and the scope of the technical spirit of the present disclosure is not limited by these embodiments. The scope of protection of the present disclosure should be interpreted by the claims below, and all technical spirits within the scope equivalent to the scope of the claims should be interpreted as being included in the scope of the claims of the present disclosure.

## Claims

1. A rotating device for bushing installed in an enclosure of a power device, comprising:
a main bracket installed on one side of a fixing part of an enclosure;
a driving sprocket installed on the main bracket and rotated by a driving force of a driving source;
a driven sprocket installed on a bushing side, which rotates with respect to the fixing part of the enclosure; and
a chain wound around the driving sprocket and the driven sprocket to transmit the driving force of the driving source to the driven sprocket to rotate the bushing.

2. The rotating device of claim 1, wherein the main bracket is equipped with the driving source for driving the driving sprocket and a decelerator for reducing and transmitting the driving force of the driving source.

3. The rotating device of claim 2, further comprising:
a main cover installed to face a surface of one side of the main bracket at a predetermined distance; and
a connecting piece connected to the main cover by a hinge to be relatively rotated, the connecting piece fastened to or separated from the main cover and the main bracket.

4. The rotating device of claim 3, wherein a driving shaft is installed with both ends thereof being rotatably supported by the main bracket and the main cover with bearings,
wherein the driving shaft is rotated by the driving force output through the decelerator.

5. The rotating device of claim 4, wherein the driving sprocket is installed on the driving shaft, and a driving gear which receives power by being engaged with an output gear provided on a decelerator shaft of the decelerator is installed on the driving shaft.

6. The rotating device of claim 1, wherein the driven sprocket is configured by being divided into a semicircular first piece and second piece and installed on the bushing side rotating with respect to the fixing part of the enclosure.

7. The rotating device of claim 6, wherein cutting surfaces are formed at each end of the first piece and the second piece and the driven sprocket is installed on the bushing side in a state where the cutting surfaces are in contact with each other,
wherein the cutting surfaces are positioned in the gravity direction and the gravity opposite direction respectively in the driven sprocket.

8. The rotating device of any one of claims of 1 to 7, further comprising a clamp provided on the fixing part of the enclosure for guiding the rotation of the bushing side,
wherein the clamp includes a pad for guiding the rotation of the rotating bushing side.

9. The rotating device of claim 8, wherein the clamp is installed at a predetermined distance from the main cover.

10. The rotating device of claim 9, wherein the clamp includes: a clamp body; a first guide plate and a second guide plate extending parallel to each other in the clamp body; and the pad installed on the second guide plate.
